# EUROPÄISCHE PATENTSCHRIFT

(11) **EP 2 418 163 B1**
(45) Veröffentlichungstag und Bekanntmachung des Hinweises auf die Patenterteilung: **07.11.2012**
(21) Anmeldenummer: 10008370.8
(22) Anmeldetag: 11.08.2010
(51) Int. Cl.: B65G 57/06, B65B 27/08

(54) **Ladevorrichtung für Blattstapel**
Loading device for stacks of sheets
Dispositif de chargement pour piles de feuilles

(43) Veröffentlichungstag der Anmeldung: 15.02.2012
(73) Patentinhaber: Adolf Mohr Maschinenfabrik GmbH & Co. KG, 65719 Hofheim am Taunus (DE)
(72) Erfinder: Schnatz, Albrecht, 65719 Hofheim (DE); Brinkmann, Werner, 65719 Hofheim (DE)
(74) Vertreter: Quermann, Helmut

(56) Entgegenhaltungen:
- EP-A1- 0 487 837
- EP-B1- 1 716 063
- GB-A- 2 207 907
- US-A- 5 567 113

## Beschreibung

Die Erfindung betrifft eine Ladevorrichtung für aus einzelnen Blattlagen gebildete quaderförmige Stapel.

Solche Ladevorrichtungen sind als Beladevorrichtungen oder Entladevorrichtungen ausgebildet. Die Beladevorrichtung dient insbesondere der Entnahme von Teilstapeln von einem Gesamtstapel und die Entladevorrichtung dem Bilden eines Gesamtstapels aus Teilstapeln, nach dem Ausrichten der Teilstapel.

Solche Beladevorrichtungen und Entladevorrichtungen sind als separate Baueinheiten ausgebildet und demzufolge baulich aufwendig gestaltet. Sie benötigen zudem einen großen Aufstellungsplatz. Diese Ladevorrichtungen finden insbesondere im Zusammenhang mit einer Schneidmaschine zum Schneiden der einzelnen Stapel Verwendung. Eine Schneidmaschine mit einer Anordnung von Beladevorrichtung und Entladevorrichtung ist beispielsweise in der DE 203 21 041 U1 beschrieben.

Eine Ladevorrichtung, die dem Entladen von Stapeln zur Bildung eines Gesamtstapels dient, ist in der DT 25 51 252 A1 beschrieben. Sie weist einen Ständer auf, in dem ein Tisch zur Aufnahme eines quaderförmigen Stapels horizontal und vertikal verfahrbar gelagert ist. Von der Schneidmaschine kommend wird der Stapel auf den Tisch gegen einen Anschlag geschoben. Anschließend wird der Anschlag aus dem Förderweg des Tisches nach oben verfahren, sodass der Tisch, zusammen mit dem darauf befindlichen Stapel, in eine Position oberhalb des Gesamtstapels bewegt werden kann. Dort wird das in Förderrichtung des Tisches vordere Ende des Stapels von einer Greiferanordnung ergriffen. Beim anschließenden Zurückverfahren des Tisches legt sich der Stapel ausgerichtet auf dem darunter befindlichen Reststapel ab und bildet nach dem Lösen der Greiferanordnung den nunmehr eine größere Höhe aufweisenden Gesamtstapel.

Gemäß Praxisanforderungen kann es durchaus erforderlich sein, von einer Palette, auf dem sich ein Gesamtstapel befindet, Teilstapel abzunehmen, um sie auf einer anderen Palette abzusetzen. Dies ist beispielsweise dann erforderlich, wenn nur ein Teil des Gesamtstapels weiterverarbeitet werden soll. Hierbei kann durchaus auch der Fall auftreten, dass mehrere, insbesondere zwei Teilstapel, die sich über die gesamte Höhe des Gesamtstapels erstrecken, den Gesamtstapel bilden. Dieser quaderförmige Gesamtstapel ist somit vertikal in zwei identische quaderförmige Teilstapel halbiert. Es kann erforderlich sein, nur einen Teil der Stapel umzusetzen, somit von einer Palette zu entnehmen und auf der anderen Palette abzustapeln.

Eine Vorrichtung und ein Verfahren zum Zusammenstellen von einzelnen, insbesondere aus Karton bestehenden Stapeln zu einem Gesamtstapel ist aus der US 5,567,113 A bekannt.

Die Erfindung geht von der Ladevorrichtung gemäß der vorstehend genannten DT 25 51 252 A1 als nächstkommenden Stand der Technik aus, die die Merkmale des Oberbegriffs des Patentanspruchs 1 aufweist.

Aufgabe der Ereindung ist es, eine baulich besonders einfach gestaltete Ladevorrichtung zu schaffen, die als Baueinheit gestaltet, sowohl ein unkompliziertes Beladen als auch Entladen der Ladevorrichtung ermöglicht.

Gelöst wird die Aufgabe durch eine Ladevorrichtung für aus einzelnen Blattlagen gebildete quaderförmige Stapel, mit einem Ständer, einem in dem Ständer gelagerten, horizontal und vertikal verfahrbaren Tisch zur Aufnahme mindestens eines Stapels, ferner mit in dem Ständer gelagerten Belademitteln zum Übernehmen des mindestens einen Stapels in einen ersten Bereich der Ladevorrichtung auf den Tisch, mit im Ständer gelagerten Mitteln zum Ausrichten des auf den Tisch übernommenen mindestens einen Stapels auf dem Tisch, und mit im Ständer gelagerten Entlademitteln zum Abheben des mindestens einen Stapels in einem anderen, zweiten Bereich der Ladevorrichtung vom Tisch.

Unter Lagerung von Tisch bzw. Belademitteln bzw. Mitteln zum Ausrichten bzw. Entlademitteln im Ständer wird jede unmittelbare oder mittelbare Lagerung im Ständer verstanden.

Die erfindungsgemäße Ausbildung der Ladevorrichtung ermöglicht es, in einer Baueinheit die Funktionen des Beladens der Ladevorrichtung als auch das Entladens der Ladevorrichtung zu verwirklichen. Es sind keine separaten Vorrichtungen notwendig, die zu beladen und zu entladen sind.

Zentrales Element der erfindungsgemäßen Ladevorrichtung ist der Ständer, der stationär gelagert ist, insbesondere in einem Boden gelagert ist und der alle funktionellen Bauteile der Ladevorrichtung unmittelbar oder mittelbar, insbesondere mittelbar aufnimmt.

Zur mittelbaren Aufnahme dieser funktionellen Bauteile weist der Ständer vorzugsweise zwei Trägerteile, insbesondere zwei übereinander angeordnete, horizontal positionierte Trägerteile gelagert.

Die Wirkungsweise der erfindungsgemäßen Vorrichtung ist derart, dass der im Ständer unmittelbar oder mittelbar gelagerte, horizontal und vertikal verfahrbare Tisch in Richtung des Gesamtstapels, von dem ein Teilstapel abzunehmen ist, verfahren wird. Hierzu ist der Tisch entsprechend vertikal positioniert. Übernommen wird dieser Stapel mittels der Belademittel zum Übernehmen des Stapels in einem ersten Bereich der Ladevorrichtung auf den Tisch. Diese Belademittel weisen vorzugsweise eine antreibbare Auffächerwalze und eine verfahrbare Greifeinrichtung auf, wobei die Auffächerwalze im Tisch auf dessen dem zu übernehmenden Stapel zugewandten Seite gelagert ist und die Greifeinrichtung im Ständer gelagert ist. Der Tisch wird zusammen mit der angetriebenen Auffächerwalze in Richtung des Gesamtstapels und mit der Auffächerwalze gegen diesen gefahren, sodass der Gesamtstapel, bei Bildung eines Spalts zwischen abzunehmendem Teilstapel und Reststapel, aufgefächert wird. Die Greifeinrichtung ergreift im Bereich einer Seite eines Gesamtstapels den durch das Auffächern gebildeten Teilstapel und hebt diesen geringfügig an, sodass dann der Tisch mit der angetriebenen Auffächerwalze weiter in den zwischen dem abzunehmenden Stapel und dem Reststapel gebildeten Spalt einfahren kann. Die Greifeinrichtung hält hierbei den abzunehmenden Stapel in der Position, bis der Tisch vollständig unter diesen Stapel gefahren ist und der Stapel somit auf dem Tisch ruht. Dann wird der Greifer gelöst und aus dem Stapel herausgefahren und dann nach oben verfahren.

Anschließend wird der Tisch horizontal vom Reststapel weg verfahren, insbesondere zu einem zentralen Bereich der Ladevorrichtung in unmittelbarer Nähe eines vertikal angeordneten Trägerteils des Ständers. Es erfolgt dort das Ausrichten des auf dem Tisch befindlichen Stapels auf dem Tisch mittels der Mittel zum Ausrichten. Diese Mittel zum Ausrichten weisen vorzugsweise ein in Förderrichtung des Stapels vorderes Anschlaglineal und ein hinteres Richtlineal auf. Diese beiden Lineale stellen ein erstes Mittel zum Ausrichten dar. Beim Verfahren des Stapels zusammen mit dem Tisch gelangt der Stapel gegen das Anschlaglineal, das vorzugsweise in einer Position angeordnet ist, in der es vorne mit dem Tisch abschließt. Es wird dann von hinten das hintere Richtlineal gegen den Stapel bewegt, sodass der Stapel vorne und hinten am Anschlaglineal und am hinteren Richtlineal ausgerichtet ist. Anschlaglineal und hinteres Richtlineal sind sowohl horizontal als auch vertikal verfahrbar.

Nach dem Ausrichten werden Anschlaglineal und hinteres Richtlineal aus dem Bereich des Stapels herausgefahren, bevorzugt nach oben weggefahren.

Anschließend wird der Tisch mit dem darauf befindlichen Stapel weiter nach vorne gefahren, in den Bereich oberhalb des Stapels, auf dem der auf dem Tisch aufliegende Stapel abzulegen ist. Hierbei kontaktiert in der maximal nach vorne gefahrenen Position des Tisches der ausgerichtete Stapel insbesondere ein vorderes Richtlineal und es wird hinter dem Stapel ein hinteres Richtlineal positioniert, das gegen das hintere Ende des Stapels bewegt wird und somit den Stapel zwischen vorderem und hinterem Richtlineal positioniert. Zusätzlich erfolgt vorzugsweise ein seitliches Richten des Stapels mittels seitlicher Richtlineale. Der Stapel ist somit allseitig ausgerichtet und stellt sich somit als Quader dar.

Vorderes, hinteres und seitliche Ausrichtlineale stellen ein zweites Mittel zum Ausrichten dar, zwecks allseitigem Ausrichten des auf dem Tisch aufgenommenen Stapels vor dessen Abgeben vom Tisch.

Das Abgeben des Stapels in diesem anderen, zweiten Bereich der Ladevorrichtung vom Tisch erfolgt mittels der vorgesehenen Entlademittel. Bei diesen Entlademitteln handelt es sich insbesondere um das hintere Richtlineal des zweiten Mittels zum Ausrichten. Verbleibt dieses hintere Richtlineal in Position, ist es nur erforderlich, unter dem Stapel den Tisch wieder herauszuziehen, konkret in einer Bewegung in Richtung des Stapels, von dem ein neuer Teilstapel abzunehmen ist. Dies führt dazu, dass der auf dem Tisch aufliegende Stapel auf dem darunterliegenden befindlichen, exakt positionierten Stapel ausgerichtet abgelegt wird.

Wird der Tisch wieder in seine hintere Position zur Aufnahme des nächsten Stapels zurückverfahren, fährt der Tisch, bei angetriebener Auffächerwalze, in den Spalt zwischen Stapel und Reststapel ein und es ergreift die verfahrbare Greifeinrichtung den nächsten abzunehmenden Stapel. Es schließt sich dann das Beladen des Tisches und dessen Entladen, wie vorbeschrieben, als neuer Zyklus an.

Mit der erfindungsgemäßen Ladevorrichtung kann nicht nur jeweils ein Stapel entladen werden, sondern es können gleichzeitig mehrere, in Querrichtung des Tisches nebeneinander angeordnete Stapel vom Reststapel, der entsprechend nebeneinander angeordnete Stapel aufweist, entnommen werden. Es ist hierbei nur erforderlich, die Belademittel so auszubilden, dass die verfahrbare Greifeinrichtung mehrere Greifer aufweist, wobei jeder Greifer einen der nebeneinander angeordneten Stapel ergreifen kann.

Besonders vorteilhaft ist bei der Ladevorrichtung die parallele Anordnung von vorderem Anschlaglineal und hinterem Richtlineal des ersten Mittels zum Ausrichten sowie des hinteren und vorderen Richtlineals des zweiten Mittels zum Ausrichten. Der Stapel wird somit während des gesamten Förderns mittels der Ladevorrichtung in einer Richtung gefördert. Dies vereinfacht die bauliche Gestaltung der Ladevorrichtung und auch das funktionelle Zusammenwirken von Tisch, Belademitteln, Ausrichtmitteln und Entlademitteln.

Baulich besonders einfach und funktionell besonders vorteilhaft ist die Ladevorrichtung gestaltet, wenn der Ständer mindestens ein vertikal angeordnetes, bodengelagertes Trägerteil und mindestens ein horizontal angeordnetes, im vertikal angeordneten Trägerteil gelagertes Trägerteil aufweist. Insbesondere sind das oder die horizontal angeordneten Trägerteile in einem einzigen, vertikal angeordneten Trägerteil vertikal verfahrbar gelagert. Besonders vorteilhaft ist es in diesem Zusammenhang, wenn die Greifeinrichtung vertikal und horizontal verfahrbar in einem horizontal angeordneten Trägerteil gelagert ist. Das Anschlaglineal und das Richtlineal des ersten Mittels zum Ausrichten sind insbesondere horizontal und/oder vertikal verfahrbar. Besonders vorteilhaft ist es, wenn das Anschlaglineal und dieses Richtlineal in dem horizontal angeordneten Trägerteil gelagert sind, in dem die Greifeinrichtung gelagert ist.

Bezüglich des zweiten Mittels zum Ausrichten wird es als besonders vorteilhaft angesehen, wenn das hintere Ausrichtlineal und ein seitliches Ausrichtlineal vertikal und/oder horizontal verfahrbar im horizontal angeordneten Trägerteil gelagert sind, insbesondere in dem Trägerteil, in dem das Anschlaglineal, das Bestandteil des ersten Mittels zum Ausrichten bildet, gelagert ist.

Vorzugsweise ist der verfahrbare Tisch in einem anderen, insbesondere unteren horizontal angeordneten Trägerteil gelagert als das Bestandteil des ersten Mittels zum Ausrichten bildende Richtlineal und/oder Anschlaglineal. Ferner ist ein seitliches Ausrichtlineal vorzugsweise in einem horizontal angeordneten, insbesondere oberen Trägerteil gelagert. Das Ausrichtlineal kann durchaus stationär im Trägerteil gelagert sein. Entsprechendes gilt für das vordere Ausrichtlineal. Auch dieses kann durchaus stationär im horizontal angeordneten, insbesondere unteren Trägerteil gelagert sein. Das vordere Ausrichtlineal bildet somit einen festen Anschlag.

Weitere Merkmale der Erfindung sind in der Beschreibung und der Zeichnung der Figuren dargestellt, wobei bemerkt wird, dass alle Einzelmerkmale und alle Kombinationen von Einzelmerkmalen erfindungswesentlich sind.

In der Zeichnung ist die Erfindung anhand eines Ausführungsbeispiels dargestellt, ohne hierauf beschränkt zu sein.

Es zeigt:
- Fig. 1: eine Draufsicht der erfindungsgemäßen Ladevorrichtung, mit, auf die Orientierung der Figur bezogen, links angeordneten, zu entstapelnden Stapeln, und rechts angeordneten Stapeln, die durch Abstapeln mittels der Ladevorrichtung gebildet sind,
- Fig. 2: die Anordnung gemäß Fig. 1 in einer Vorderansicht, veranschaulicht für den Zustand der vollständigen Übernahme eines Stapels auf den verfahrbaren Tisch der Vorrichtung,
- Fig. 3: eine Ansicht gemäß Fig. 2, veranschaulicht für die Positionierung des Tisches im zentralen Bereich der Ladevorrichtung zwecks Ausrichten des Stapels auf dem Tisch mittels erster Mittel zum Ausrichten,
- Fig. 4: eine Ansicht gemäß der Fig. 2 und 3, veranschaulicht für den Zustand der Ladevorrichtung in einer Position des Tisches vor dem Entladen des Stapels.

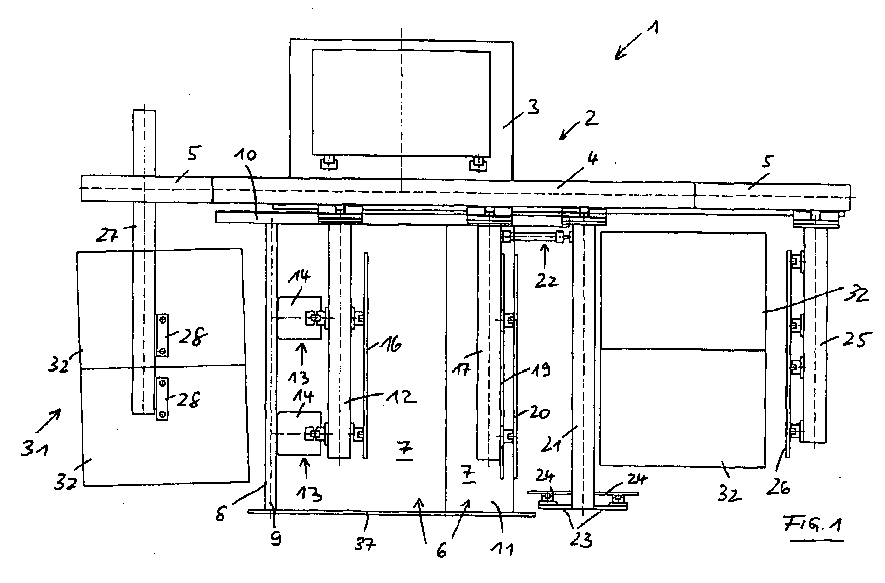

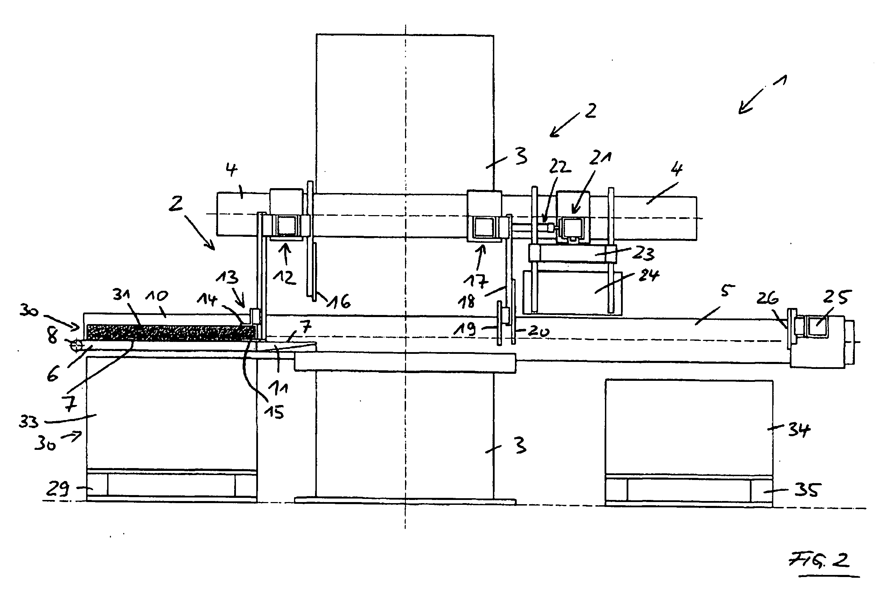

Die nachfolgende Beschreibung bezieht sich zunächst auf die Darstellung der Fig. 1 und 2:

Eine Ladevorrichtung 1 weist einen Ständer 2 auf. Der Ständer ist durch ein vertikal angeordnetes, im Boden gelagertes Trägerteil 3 und zwei horizontal angeordnete, im Trägerteil 3 gelagerte Trägerteile 4 und 5 gebildet. Die Trägerteile 4 und 5 sind im Wesentlichen übereinander angeordnet, wobei es sich bei dem Trägerteil 4 um das obere und bei dem Trägerteil 5 um das untere Trägerteil handelt. Mittels nicht näher dargestellter Mittel sind die beiden Trägerteile 4 und 5 vertikal im Trägerteil 3 verfahrbar. Im unteren Trägerteil 5 ist ein Tisch 6 gelagert, der horizontal angeordnet ist und eine horizontale Aufnahmefläche 7 für den Stapel aufweist. Die Grundfläche des Tisches 6 ist rechteckig.

Im Bereich eines hinteren Endes ist der Tisch 6 mit einer Auffächerwalze 8 versehen, die um eine Achse 9 mittels eines nicht näher veranschaulichten Antriebes drehbar ist. Die Achse 9 verläuft parallel zur hinteren Kante des Tisches 6. Über nicht näher dargestellte Stellmittel ist der Tisch 6 horizontal verfahrbar im unteren Trägerteil 5 gelagert. Der Tisch 6 weist auf seiner dem Trägerteil 4 zugewandten Seite ein seitliches Richtlineal 10 auf, das oben über die Aufnahmefläche 7 des Tisches 6 hinaussteht. Der Tisch 6 ist auf der abgewandten Seite mit einer nach unten ragenden Versteifungsplatte 37 versehen. Im Bereich seines der Auffächerwalze 8 abgewandten Endes ist der Tisch 6 mit einem nach unten abklappbaren, keilförmigen Tischteil 11 versehen. Dieser wird dann, wenn der Tisch unter einem Stapel herausgezogen werden soll, zwecks Abladen des Stapels auf einer Unterlage, insbesondere einem Stapel, geringfügig nach unten geschwenkt, sodass der auf dem Tisch 6 aufliegende Stapel besonders vorteilhaft mit geringem Überbrückungsspalt zum darunterliegenden Stapel auf diesem abgelegt werden kann.

Im oberen Trägerteil 4 ist, dem linken Bereich der Ladevorrichtung zugewandt, ein quer verlaufendes Trägerteil 12 angeordnet. Dieses Trägerteil 12 ist horizontal positioniert und über nicht näher veranschaulichte Stellmittel horizontal im Trägerteil 4 verfahrbar. Auf seiner linken Seite nimmt das Trägerteil 12 eine Greifeinrichtung auf, die durch zwei in horizontalem Abstand zueinander angeordnete Greifer 13 gebildet ist. Jeder Greifer 13 ist als Greiferzange ausgebildet, mit einem Greiferoberteil 14 und einem Greiferunterteil 15, die mittels eines Stellmittels, beispielsweise eines Pneumatikzylinders zueinander zustellbar sind. Der jeweilige Greifer 13 ist insgesamt im Trägerteil 12 vertikal verfahrbar gelagert.

Im Trägerteil 12 ist auf dessen den Greifern 13 abgewandten Seite, somit im Bereich der rechten Seite des Trägerteils 12 ein Richtlineal 16 gelagert. Dieses weist auf seiner rechten Seite eine vertikal angeordnete Ausrichtfläche auf, im Bereich derer ein Stapel das Richtlineal beim Ausrichten kontaktiert. Das Richtlineal 16 ist über nicht näher veranschaulichte Stellmittel vertikal verfahrbar im Trägerteil 12 gelagert.

Rechts neben dem Trägerteil 12 ist im Trägerteil 4 ein weiteres Trägerteil 17 gelagert. Dieses ist gleichfalls über nicht veranschaulichte Stellmittel horizontal in Längserstreckung des Trägerteils 4 verfahrbar.

Mit dem Trägerteil 17 ist eine nach unten gerichtete Aufnahme 18 verbunden, in der in deren linken Bereich ein Anschlaglineal 19 und in deren rechten Bereich ein hinteres Richtlineal 20 gelagert ist. Die beiden Lineale 19 und 20 sind über nicht veranschaulichte Stellmittel vertikal verfahrbar in der Aufnahme 18 gelagert. Die Anlageflächen der Lineale 19 und 20, die dem Anlegen am Stapel dienen, sind parallel zueinander und vertikal angeordnet, somit parallel zur Anlagefläche des Richtlineals 16 angeordnet.

Parallel zum Trägerteil 12 und zum Trägerteil 17 ist weiter rechts vom Trägerteil 17 ein weiteres Trägerteil 21 angeordnet und im Trägerteil 4 gelagert. Dieses Trägerteil 21 ist horizontal im Trägerteil 4 verschieblich, wobei ein Stellmittel 22 zwischen den Trägerteilen 17 und 21 angeordnet ist. Im Bereich des dem Trägerteil 4 abgewandten Endes ist mit dem Trägerteil 21 eine Aufnahme 23 verbunden, in der, auf der dem Trägerteil 4 zugewandten Seite der Aufnahme 23, ein seitliches Richtlineal 24 gelagert ist. Dieses Richtlineal 24 ist vertikal verfahrbar. Dessen Anlagefläche, die zur Kontaktierung des Stapels vorgesehen ist, ist senkrecht zur Anlagefläche des Richtlineals 20 angeordnet.

Im Bereich des rechten Endes nimmt das untere Trägerteil 5 ein Trägerteil 25 auf, das parallel zu den Trägerteilen 12, 17 und 21 angeordnet ist. Das Trägerteil 25 ist horizontal verfahrbar im Trägerteil 5 gelagert und nimmt auf seiner linken Seite, somit der Seite, die dem Richtlineal 20 zugewandt ist, ein vorderes Richtlineal 26 auf. Es ist nicht erforderlich, dass dieses vertikal verfahrbar ist.

In der Fig. 1 ist veranschaulicht, dass das untere Trägerteil 5 im Bereich seines linken Endes ein weiteres Trägerteil 27 aufnimmt. Dieses ist horizontal angeordnet und erstreckt sich parallel zu den Trägerteilen 12, 17, 21 und 25. Das Trägerteil 27 ist horizontal verfahrbar im Trägerteil 5 gelagert. Es nimmt im Bereich seines dem Trägerteil 5 abgewandten Endes zwei Niederhalter 28 auf, die horizontal angeordnete Platten aufweisen, welche über nicht näher veranschaulichte Stellmittel im Trägerteil 27 gelagert und vertikal verfahrbar sind.

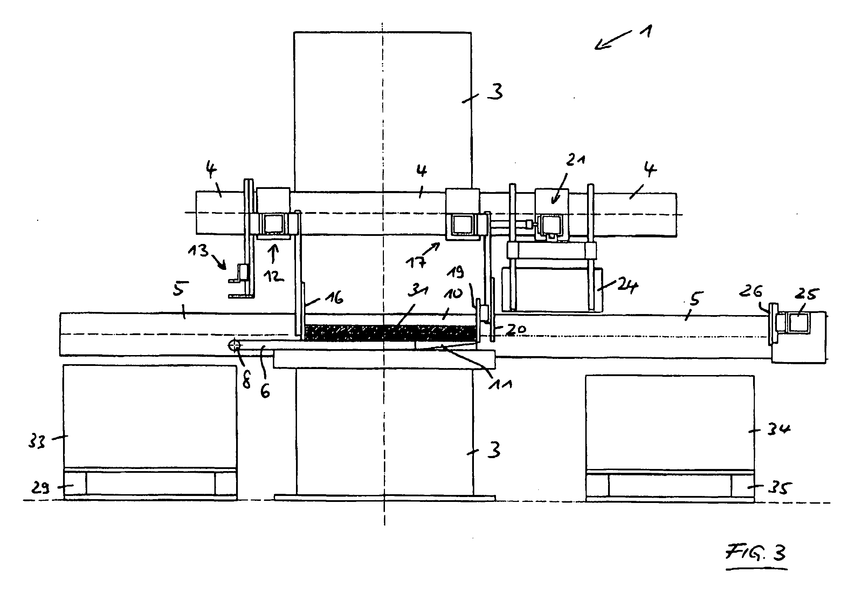

Nachfolgend wird die Wirkungsweise der insoweit beschriebenen Ladevorrichtung anhand der Darstellung der Fig. 1 bis 4 erläutert:
Im Bereich des linken Endes der Ladevorrichtung wird eine Palette 29 mit einem darauf befindlichen, aus einzelnen Blattlagen gebildeten großen quaderförmigen Stapel 30 platziert. Von diesem Gesamtstapel ist ein Teilstapel abzunehmen, genauer gesagt, eine Stapelanordnung 31, die durch zwei nebeneinander angeordnete identische quaderförmige Stapel 32 gebildet ist. Es liegen somit auf der Palette 29 zwei sich über die gesamte Höhe des Stapels 30 erstreckende nebeneinander angeordnete Teilstapel auf. Zum Entnehmen der beiden Stapel 32, sodass auf der Palette 29 die beiden nebeneinander angeordneten Reststapel 33 verbleiben, werden über nicht näher dargestellte Mittel die beiden Stapel 32 im Bereich deren rechten Seiten geringfügig angehoben und es fahren dort die beiden Greifer 13 in die zwischen den Stapeln 32 und
den Reststapeln 33 gebildeten Spalt ein. Dann werden die beiden Stapel 32 mittels der beiden Greifer 13 erfasst und geklemmt. Anschließend wird der Tisch 6 mit der dann angetriebenen Auffächerwalze 8, ausgehend von der Position des Tisches 6 gemäß Fig. 1 in die Position des Tisches 6 gemäß Fig. 2 verfahren, wobei die auf die Stapel 32 abgesenkten Niederhalter 28 ein Verschieben der Blattlagen der Stapel 32 verhindern. Beim fortwährenden Einfahren des Tisches 6 wird der Niederhalter entsprechend angehoben. Wie es die Darstellung gemäß Fig. 2 veranschaulicht, liegt die aus den beiden Stapeln 32 gebildete Stapelanordnung 31 vollständig auf dem Tisch 6 auf. Der Tisch 6 wird weiter eingefahren, bis die beiden Stapel 32 mit der Spitze des Tischteils 11 des Tisches 6 abschließen. Dort wurden die Greifer 13 gelöst und nach oben aus dem Verfahrbereich von Tisch 6 und Stapeln 32 angehoben. Anschließend wird der Tisch 6 mit den beiden Stapeln 32 nach rechts verfahren, in eine Endstellung, in der die Spitze des Tischteils 11 unmittelbar benachbart dem in abgesenkter Stellung befindlichen Anschlaglineal 19 ist. Es wird dann hinter den beiden Stapeln 32 das Richtlineal 16 abgesenkt und horizontal geringfügig verfahren, zum Ausrichten der beiden Stapel 32 zwischen den parallel angeordneten Linealen ― Anschlaglineal 19 und Richtlineal 16. Dieser Zustand ist in Fig. 3 veranschaulicht.

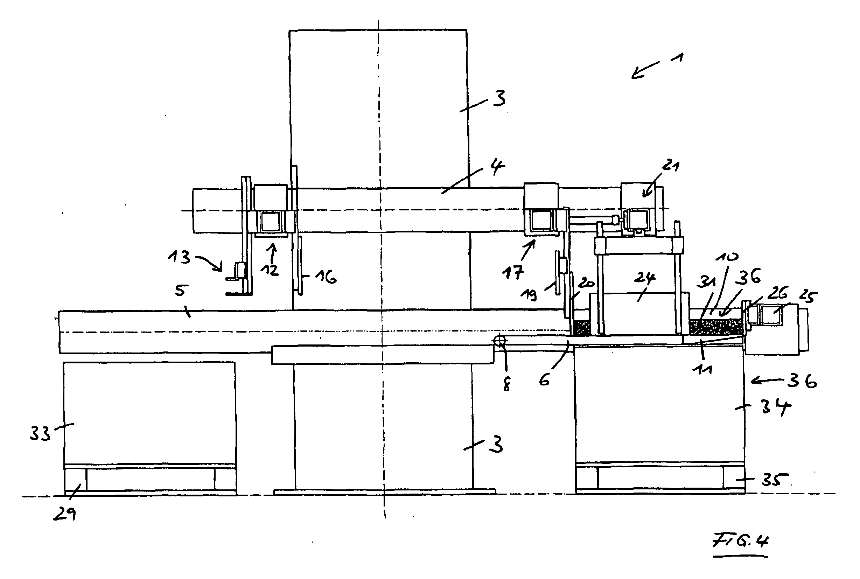

Anschließend werden Richtlineal 16, Anschlaglineal 19 und hinteres Richtlineal 20 angehoben, sodass der Tisch 6 mit den darauf befindlichen beiden Stapeln 32 weiter nach rechts verfahren kann, in eine Endstellung, in der die Spitze des Tischteils 11 unmittelbar benachbart dem vorderen Richtlineal 26 ist. Anschließend wird das hintere Richtlineal 20 abgesenkt und horizontal gegen die beiden Stapel 32 verfahren, sodass die beiden Stapel vorne und hinten zwischen dem vorderen Richtlineal 26 und dem hinteren Richtlineal 20 ausgerichtet sind. Zusätzlich erfolgt ein seitliches Ausrichten der durch die beiden Stapel 32 gebildeten Stapelanordnung durch Absenken und horizontales Verfahren des seitlichen Richtlineals 24 auf die Stapelanordnung zu, womit diese Stapelanordnung zwischen dem seitlichen Richtlineal 24 und dem parallel hierzu befindlichen Richtlineal 10 des Tisches 6 ausgerichtet wird. Im Ergebnis ist somit eine präzise quaderförmig ausgerichtete Stapelanordnung 31, die durch die beiden Stapel 32 gebildet ist, geschaffen. Dieser Zustand ist in Fig. 4 veranschaulicht. Es wird dann das seitliche Richtlineal 24 von der Stapelanordnung 31 weg verfahren und das Tischteil 31 mit seiner Spitze geringfügig abgesenkt. Anschließend wird der Tisch 6 wieder zurückgefahren und somit nach links gefahren, womit aufgrund des an der Stapelanordnung 31 anliegenden hinteren Richtlineals 20 der Tisch 6 unter den Stapeln 32 herausgezogen wird. Die Stapel 32 werden somit kantengenau auf einem entsprechend platzierten Reststapel 34 abgelegt, der im Bereich des rechten Endes der Ladevorrichtung auf einer Palette 35 ruht. Auf dieser Palette 35 wird somit durch Ablegen der Stapel 32 ein höherer Stapel 36 gebildet.

Beim Zurückfahren des Tisches 6 fährt dieser mit der Auffächerwalze 8 zwischen die Stapelanordnung 31 und den Reststapel 30 ein und es ergreifen die beiden Greifer 13 die beiden nächsten Stapel 32 der nächsten Lage des Stapels 30 und bilden einen Spalt zwischen der nächsten Stapelanordnung 31 und dem Reststapel 33, wie es zur Fig. 2 veranschaulicht ist. Es schließt sich dann der beschriebene Zyklus des Beladens und anschließenden Entladens des Tisches 6 an.

## Patentansprüche

1. Ladevorrichtung (1) für aus einzelnen Blattlagen gebildete quaderförmige Stapel, mit einem Ständer (2), einem in dem Ständer (2) gelagerten, horizontal und vertikal verfahrbaren Tisch (6) zur Aufnahme mindestens eines Stapels (32), ferner mit im Ständer (2) gelagerten Entlademitteln (20) zum Abgeben des mindestens einen Stapels (32) in einem Bereich der Ladevorrichtung (1) vom Tisch (6), **gekennzeichnet durch** in dem Ständer (2) gelagerte Belademittel (8, 13) zum Übernehmen des mindestens einen Stapels (32) in einem ersten Bereich der Ladevorrichtung (1) auf den Tisch (6), ferner **durch** im Ständer (2) gelagerte Mittel (16, 19, 20, 24, 26) zum Ausrichtung des auf dem Tisch (6) übernommenen mindestens einen Stapels (32) auf dem Tisch (6), wobei die Entlademittel (20) in einem anderen, zweiten Bereich der Ladevorrichtung (1) angeordnet sind.

2. Ladevorrichtung nach Anspruch 1, wobei die Mittel (16, 19, 20, 24, 26) zum Ausrichten ein in Förderrichtung des mindestens einen Stapels (32) vorderes Anschlaglineal (19) und ein hinteres Richtlineal (16) aufweisen, die ein erstes Mittel zum Ausrichten bilden.

3. Ladevorrichtung nach Anspruch 1 oder 2, wobei die Mittel (16, 19, 20, 24, 26) zum Ausrichten ein vorderes (26), ein hinteres (20) und seitliche Richtlineale (10, 24) aufweisen, die ein zweites Mittel zum Ausrichten bilden, zum allseitigen Ausrichten des von dem Tisch (6) aufgenommenen mindestens einen Stapels (32) vor dessen Abgeben vom Tisch (6).

4. Ladevorrichtung nach Anspruch 3, wobei die Entlademittel (20) durch das hintere Ausrichtlineal (20) des zweiten Mittels zum Ausrichten des mindestens einen Stapels (32) gebildet sind.

5. Ladevorrichtung nach einem der Ansprüche 1 bis 4, wobei die Belademittel (8, 13) eine antreibbare Auffächerwalze (8) und eine verfahrbare Greifeinrichtung (13, 13) umfassen, wobei die Auffächerwalze (8) im Tisch (6) auf dessen dem zu übernehmenden mindestens einen Stapel (32) zugewandten Seite gelagert ist und die Greifeinrichtung (13, 13) im Ständer (2) gelagert ist.

6. Ladevorrichtung nach einem der Ansprüche 1 bis 5, wobei der Ständer (2) mindestens ein vertikal angeordnetes, bodengelagertes Trägerteil (3) und mindestens ein horizontal angeordnetes, im vertikal angeordneten Trägerteil (3) gelagertes Trägerteil (4, 5) aufweist.

7. Ladevorrichtung nach Anspruch 6, wobei das oder die horizontal angeordneten Trägerteile (4, 5) in dem einzigen vertikal angeordneten Trägerteil (3) vertikal verfahrbar gelagert sind.

8. Ladevorrichtung nach Anspruch 6 oder 7, wobei die Greifeinrichtung (13, 13) vertikal und horizontal verfahrbar in einem horizontal angeordneten Trägerteil (12) gelagert ist.

9. Ladevorrichtung nach einem der Ansprüche 2 bis 8, wobei das Anschlaglineal (19) und das Richtlineal (16) des ersten Mittels zum Ausrichten vertikal und/oder horizontal verfahrbar sind.

10. Ladevorrichtung nach Anspruch 8 oder 9, wobei das Anschlaglineal (19) und das Richtlineal (16) des ersten Mittels zum Ausrichten in dem horizontal angeordneten Trägerteil (4) gelagert sind, in dem die Greifeinrichtung (13, 13) gelagert ist.

11. Ladevorrichtung nach einem der Ansprüche 3 bis 10, wobei das hintere Ausrichtlineal (20) und ein seitliches Ausrichtlineal (24) des zweiten Mittels zum Ausrichten vertikal und/oder horizontal verfahrbar gelagert sind
und im horizontal angeordneten Trägerteil (4) gelagert sind, insbesondere in dem Trägerteil (4), in dem das Anschlaglineal (19) gelagert ist

12. Ladevorrichtung nach einem der Anspruche 2 bis 11, wobei der verfahrbare Tisch (6) in einem anderen Trägerteil (5) gelagert ist als das Bestandteil des ersten Mittels zum Ausrichten bildende Richtlineal (16) und/oder das Anschlaglineal (19), insbesondere im unteren horizontal angeordneten Trägerteil (5) gelagert ist.

13. Ladevorrichtung nach einem der Ansprüche 3 bis 11, wobei ein seitliches Ausrichtlineal (10) mit dem Tisch (6) verbunden ist.

14. Ladevorrichtung nach einem der Ansprüche 3 bis 13, wobei das vordere Ausrichtlineal (26) des zweiten Mittels zum Ausrichten ausschließlich horizontal verschieblich im horizontal angeordneten, insbesondere unteren Trägerteil (5) gelagert ist.

15. Ladevorrichtung nach einem der Ansprüche 3 bis 14, wobei das vordere Anschlaglineal (19) und das hintere Richtlineal (16) des ersten Mittels zum Ausrichten sowie das hintere Richtlineal (20) und das vordere Richtlineal (26) des zweiten Mittels zum Ausrichten vertikal und parallel zueinander angeordnet sind.

## Claims

1. Loading apparatus (1) for cuboidal stacks formed from individual layers of sheets, having a stand (2), having a horizontally and vertically displaceable bench (6), which is mounted in the stand (2) and is intended for accommodating at least one stack (32), and also having unloading means (20), which are mounted in the stand (2) and by means of which the at least one stack (32) is discharged from the bench (6) in a region of the loading apparatus (1), **characterized by** loading means (8, 13), which are mounted in the stand (2) and by way of which the at least one stack (32) is received onto the bench (6) in a first region of the loading apparatus (1), and also by means (16, 19, 20, 24, 26) which are mounted in the stand (2) and by way of which the at least one stack (32) received on the bench (6) is aligned on the bench (6), wherein the unloading means (20) are arranged in a different, second region of the loading apparatus (1).

2. Loading apparatus according to Claim 1, wherein the aligning means (16, 19, 20, 24, 26) has a front stopping straightedge (19) and a rear aligning straightedge (16), as seen in the conveying direction of the at least one stack (32), which form a first aligning means.

3. Loading apparatus according to Claim 1 or 2, wherein the aligning means (16, 19, 20, 24, 26) have a front aligning straightedge (26), a rear aligning straightedge (20) and lateral aligning straightedges (10, 24), which form a second aligning means, by way of which the at least one stack (32) accommodated by the bench (6) is aligned on all sides prior to being discharged from the bench (6).

4. Loading apparatus according to Claim 3, wherein the unloading means (20) are formed by the rear aligning straightedge (20) of the second means for aligning the at least one stack (32).

5. Loading apparatus according to one of Claims 1 to 4, wherein the loading means (8, 13) comprise a drivable fan-out roller (8) and a displaceable gripping device (13, 13), wherein the fan-out roller (8) is mounted in the bench (6), on the side thereof which is directed towards the at least one stack (32) which is to be received, and the gripping device (13, 13) is mounted in the stand (2).

6. Loading apparatus according to one of Claims 1 to 5, wherein the stand (2) has at least one vertically arranged, floor-mounted carrier part (3) and at least one horizontally arranged carrier part (4, 5), which is mounted in the vertically arranged carrier part (3).

7. Loading apparatus according to Claim 6, wherein the horizontally arranged carrier part or parts (4, 5) is or are mounted in a vertically displaceable manner in the single vertically arranged carrier part (3).

8. Loading apparatus according to Claim 6 or 7, wherein the gripping device (13, 13) is mounted in a vertically and horizontally displaceable manner in a horizontally arranged carrier part (12).

9. Loading apparatus according to one of Claims 2 to 8, wherein the stopping straightedge (19) and the aligning straightedge (16) of the first aligning means can be displaced vertically and/or horizontally.

10. Loading apparatus according to Claim 8 or 9, wherein the stopping straightedge (19) and the aligning straightedge (16) of the first aligning means are mounted in the horizontally arranged carrier part (4), in which the gripping device (13, 13) is mounted.

11. Loading apparatus according to one of Claims 3 to 10, wherein the rear aligning straightedge (20) and a lateral aligning straightedge (24) of the second aligning means are mounted in a vertically and/or horizontally displaceable manner and are mounted in the horizontally arranged carrier part (4), in particular in the carrier part (4) in which the stopping straightedge (19) is mounted.

12. Loading apparatus according to one of Claims 2 to 11, wherein the displaceable bench (6) is mounted in a different carrier part (5) from the aligning straightedge (16) and/or the stopping straightedge (19), forming part of the first aligning means, in particular it is mounted in the lower horizontally arranged carrier part (5).

13. Loading apparatus according to one of Claims 3 to 11, wherein a lateral aligning straightedge (10) is connected to the bench (6).

14. Loading apparatus according to one of Claims 3 to 13, wherein the front aligning straightedge (26) of the second aligning means is mounted in an exclusively horizontally displaceable manner in the horizontally arranged, in particular lower carrier part (5).

15. Loading apparatus according to one of Claims 3 to 14, wherein the front stopping straightedge (19) and the rear aligning straightedge (16) of the first aligning means and the rear aligning straightedge (20) and the front aligning straightedge (26) of the second aligning means are arranged vertically and parallel to one another.

## Revendications

1. Dispositif de chargement (1) pour des piles de forme parallélépipédiques formées de couches de feuilles individuelles, comprenant un bâti (2), une table (6) montée dans le bâti (2), déplaçable horizontalement et verticalement pour recevoir au moins une pile (32), ainsi que des moyens de déchargement (20) montés dans le bâti (2), pour décharger de la table (6) l'au moins une pile (32) dans une région du dispositif de chargement (1), **caractérisé par** des moyens de chargement (8, 13) montés dans le bâti (2), pour transférer l'au moins une pile (32) dans une première région du dispositif de chargement (1) sur la table (6), ainsi que par des moyens (16, 19, 20, 24, 26) montés dans le bâti (2), pour orienter sur la table (6) l'au moins une pile (32) transférée sur la table (6), les moyens de déchargement (20) étant disposés dans une autre, deuxième, région du dispositif de chargement (1).

2. Dispositif de chargement selon la revendication 1, dans lequel les moyens (16, 19, 20, 24, 26) d'orientation présentent une règle de butée avant (19) dans la direction de transport de l'au moins une pile (32) et une règle d'orientation arrière (16), lesquelles forment un premier moyen d'orientation.

3. Dispositif de chargement selon la revendication 1 ou 2, dans lequel les moyens (16, 19, 20, 24, 26) d'orientation présentent une règle d'orientation avant (26), une règle d'orientation arrière (20) et des règles d'orientation latérales (10, 24), qui forment un deuxième moyen d'orientation pour l'orientation de tous les côtés de l'au moins une pile (32) reçue par la table (6) avant son déchargement de la table (6).

4. Dispositif de chargement selon la revendication 3, dans lequel les moyens de déchargement (20) sont formés par la règle d'orientation arrière (20) du deuxième moyen d'orientation de l'au moins une pile (32).

5. Dispositif de chargement selon l'une quelconque des revendications 1 à 4, dans lequel les moyens de chargement (8, 13) comprennent un rouleau de mise en éventail entraînable (8) et un dispositif de préhension déplaçable (13, 13), le rouleau de mise en éventail (8) étant monté dans la table (6) sur son côté tourné vers l'au moins une pile (32) à transférer, et le dispositif de préhension (13, 13) étant monté dans le bâti (2).

6. Dispositif de chargement selon l'une quelconque des revendications 1 à 5, dans lequel le bâti (2) présente au moins une partie de support (3) montée sur le sol, disposée verticalement, et au moins une partie de support (4, 5) disposée horizontalement et montée dans la partie de support (3) disposée verticalement.

7. Dispositif de chargement selon la revendication 6, dans lequel la ou les parties de support (4, 5) disposées horizontalement sont montées de manière déplaçable verticalement dans la partie de support unique (3) disposée verticalement.

8. Dispositif de chargement selon la revendication 6 ou 7, dans lequel le dispositif de préhension (13, 13) est monté de manière déplaçable verticalement et horizontalement dans une partie de support (12) disposée horizontalement.

9. Dispositif de chargement selon l'une quelconque des revendications 2 à 8, dans lequel la règle de butée (19) et la règle d'orientation (16) du premier moyen d'orientation sont déplaçables verticalement et/ou horizontalement.

10. Dispositif de chargement selon la revendication 8 ou 9, dans lequel la règle de butée (19) et la règle d'orientation (16) du premier moyen d'orientation sont montées dans la partie de support (4) disposée horizontalement, dans laquelle est monté le dispositif de préhension (13, 13).

11. Dispositif de chargement selon l'une quelconque des revendications 3 à 10, dans lequel la règle d'orientation arrière (20) et une règle d'orientation latérale (24) du deuxième moyen d'orientation sont montées de manière déplaçable verticalement et/ou horizontalement et sont montées dans la partie de support (4) disposée horizontalement, en particulier dans la partie de support (4) dans laquelle est montée la règle de butée (19).

12. Dispositif de chargement selon l'une quelconque des revendications 2 à 11, dans lequel la table déplaçable (6) est montée dans une autre partie de support (5) que la règle d'orientation (16) faisant partie du premier moyen d'orientation et/ou que la règle de butée (19), en particulier est montée dans la partie de support inférieure (5) disposée horizontalement.

13. Dispositif de chargement selon l'une quelconque des revendications 3 à 11, dans lequel une règle d'orientation latérale (10) est connectée à la table (6).

14. Dispositif de chargement selon l'une quelconque des revendications 3 à 13, dans lequel la règle d'orientation avant (26) du deuxième moyen d'orientation est montée de manière déplaçable exclusivement horizontalement dans la partie de support (5) disposée horizontalement, en particulier la partie de support inférieure (5).

15. Dispositif de chargement selon l'une quelconque des revendications 3 à 14, dans lequel la règle de butée avant (19) et la règle d'orientation arrière (16) du premier moyen d'orientation ainsi que la règle d'orientation arrière (20) et la règle d'orientation avant (26) du deuxième moyen d'orientation sont disposées verticalement et parallèlement les unes aux autres.
